(19) Europäisches Patentamt
European Patent Office
Office européen des brevets

(11) EP 0 902 055 A2

# (12) EUROPÄISCHE PATENTANMELDUNG

(43) Veröffentlichungstag:
**17.03.1999 Patentblatt 1999/11**

(21) Anmeldenummer: **98116051.8**

(22) Anmeldetag: **26.08.1998**

(51) Int. Cl.$^6$: **C08L 69/00**, C08L 67/02,
C08L 51/00
// (C08L69/00, 67:02, 51:00),
(C08L67/02, 69:00, 51:00)

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **10.09.1997 DE 19739686**

(71) Anmelder:
**BASF AKTIENGESELLSCHAFT**
**67056 Ludwigshafen (DE)**

(72) Erfinder:
- **Weber, Martin, Dr.**
  **67487 Maikammer (DE)**
- **Mülhaupt, Rolf, Prof. Dr.**
  **79117 Freiburg (DE)**

## (54) Thermoplastische Formmassen auf Basis von Polyestern und Polycarbonat

(57) Thermoplastische Formmassen, enthaltend

A) 1 bis 97 Gew.-% eines thermoplastischen Polyesters

B) 1 bis 97 Gew.-% eines Polycarbonats

C) 1 bis 40 Gew.-% eines Oxazolingruppen enthaltenden Elastomeren mit einer Glasübergangstemperatur ($T_g$) ≤ 0°C

D) 0,05 bis 5 Gew.-% eines Bisoxazolins

E) 0 bis 70 Gew.-% weiterer Zusatzstoffe und Verarbeitungshilfmittel,

wobei die Summe der Gewichtsprozente der Komponenten A) bis E) 100 % ergibt.

EP 0 902 055 A2

## Beschreibung

Die Erfindung betrifft thermoplastische Formmassen, enthaltend

| | |
|---|---|
| A) 1 bis 97 Gew.-% | eines thermoplastischen Polyesters |
| B) 1 bis 97 Gew.-% | eines Polycarbonats |
| C) 1 bis 40 Gew.-% | eines Oxazolingruppen enthaltenden Elastomeren mit einer Glasübergangstemperatur ($T_g$) ≤ 0°C |
| D) 0,05 bis 5 Gew.-% | eines Bisoxazolins |
| E) 0 bis 70 Gew.-% | weiterer Zusatzstoffe und Verarbeitungshilfmittel, |

wobei die Summe der Gewichtsprozente der Komponenten A) bis E) 100 % ergibt.

Weiterhin betrifft die Erfindung die Verwendung derartiger Formmassen zur Herstellung von Fasern, Folien und Formkörpern sowie die hierbei erhältlichen Formkörper.

Polymermischungen finden in der Technik zunehmendes Interesse, da diese maßgeschneiderte Eigenschaftskombinationen bieten. Von besonderem Interesse sind dabei Polymermischungen aus unverträglichen Polymeren, die ungewöhnliche Eigenschaftskombinationen aufweisen.

Polymermischungen auf Basis von Polyestern und Polycarbonaten sind seit Jahren bekannt (US 4 522 797, 4 764 556, 4 897 448, EP-A 180 648, DE-A 33 02 124). Die technisch wichtigen Produkte enthalten zur Verbesserung der Zähigkeit, insbesondere bei tiefen Temperaturen, auch Schlagzähmodifier, wobei insbesondere MBS-Modifier, Acrylat-Pfropfkautschuke sowie Ethylencopolymere mit polaren Comonomeren verwendet werden.

Aus der Literatur war die Verwendung von Oxazolin-gepfropftem Polypropylen als Blendkomponente für Polybutylenterephthalat (vgl. T. Vainio et al. J. Appl. Polym. Sci 61 (1996) 843-852) bekannt. Des weiteren war bekannt, Bisoxazoline zur Kettenverlängerung von Polykondensaten zu verwenden (P. Birnbrich, H. Fischer, J.D. Klamann u. B. Wegemund, Kunststoffe 83, S. 885-888 (1993)). Um den immer komplexer werdenden Anforderungen gerecht zu werden, besteht noch immer Bedarf an Polyester/Polycarbonat Blends, die sich durch eine verbesserte Fließfähigkeit, gute Tieftemperaturzähigkeit und bessere Verarbeitungsstabilität auszeichnen.

Aufgabe der vorliegenden Erfindung war es, Polyester/Polycarbonat-Formmassen zur Verfügung zu stellen, die eine gute Fließfähigkeit und Tieftemperaturzähigkeit sowie eine verbesserte Verarbeitungsstabilität aufweisen.

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 1 bis 97, bevorzugt 10 bis 87 und insbesondere 15 bis 79 Gew.-% eines thermoplastischen Polyesters.

Allgemein werden Polyester auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat oder deren Mischungen bevorzugt.

Die Viskositätszahl der Polyester (A) liegt im allgemeinen im Bereich von 70 bis 220, vorzugsweise von 100

bis 150 (gemessen in einer 0,5 gew.-%igen Lösung in einem Phenol/o-Dichlorbenzolgemisch (Gew.-Verh. 1:1 bei 25°C).

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel I

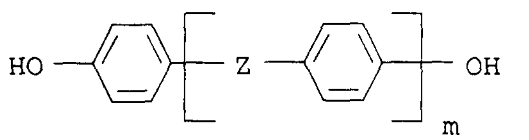

I,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen I können an den Phenylengruppen auch $C_1$-$C_6$-Alkyl- oder Alkoxygruppen und Fluor, Chlor oder Brom als Substituenten tragen.

Als Stammkörper dieser Verbindungen seien beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di(3'-methyl-4'-hydroxyphenyl)propan und
2,2-Di-(3'-chlor-4'-hydroxyphenyl)propan,

sowie insbesondere

2,2-Di-(4'-hydroxyphenyl)propan
2,2-Di(3',5'-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-

% des vollaromatischen Polyesters.

Unter Polyestern im Sinne der vorliegenden Erfindung sollen auch aromatische Polyestercarbonate verstanden werden, welche durch Umsetzung mit den vorstehend genannten aromatischen Dihydroxyverbindungen der allgemeinen Formel I, vorzugsweise Bisphenol A und [Bis(4-Hydroxyphenyl)-2,2-propan], Phosgen und aromatischen Dicarbonsäuren wie Isophthalsäure und/oder Terephthalsäure erhältlich sind.

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die Formmassen erfindungsgemäß von 1 bis 97 Gew.-%, bezogen auf die Summe der Komponenten A bis E, mindestens eines Polycarbonates. Bevorzugte erfindungsgemäße Formmassen enthalten von 10 bis 87 Gew.-%, bezogen auf die Summe der Komponenten A bis E, der Komponente B. Besonders bevorzugt sind Formmassen gemäß der Erfindung, die von 15 bis 79 Gew.-%, bezogen auf die Summe der Komponenten A bis E, der Komponente B enthalten.

Bevorzugt werden als Komponente B halogenfreie Polycarbonate eingesetzt. Geeignete halogenfreie Polycarbonate sind beispielsweise solche auf Basis von Diphenolen der vorstehenden allgemeinen Formel I (siehe Komponente A), welche keine Halogensubstituenten enthalten.

Bevorzugte Diphenole der Formel I sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente B geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000.

Die Diphenole der allgemeinen Formel I sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Das Mischungsverhältnis der Komponenten A) mit B) ist im allgemeinen beliebig. Bevorzugt sind Verhältnisse von A):B) von 10/90 bis 90/10 und insbesondere 15/85 bis 85/15.

Als Komponente C) enthalten die erfindungsgemäßen Formmassen 1 bis 40, vorzugsweise 2 bis 20 und insbesondere 5 bis 15 Gew.-% eines Oxazolingruppen enthaltenen Elastomeren (oft auch als Schlagzähmodifizier oder Kautschuk bezeichnet) mit einer Glasübergangstemperatur ($T_g$) $\leq$ 0°C, vorzugsweise $\leq$ -15°C (bestimmt mittels Differential Scanning Calorimetry (DSC) bei einer Aufheizrate von 10 K/min) Vorzugsweise werden Monomere auf der Basis von 2-Oxazolinen der allgemeinen Formel II in das Elastomer C) eingebaut in Mengen von 0,1 bis 5, vorzugsweise von 0,2 bis 2 und insbesondere von 0,1 bis 1 Gew.-%, bezogen auf 100 Gew.-% C):

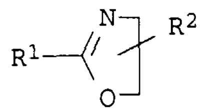

II

in der die Substituenten folgende Bedeutung haben:

$R^1$ einen aliphatischen, cycloaliphatischen, aromatischen oder araliphatischen Kohlenwasserstoffrest mit 2 bis 60, vorzugsweise 2 bis 30 C-Atomen, welcher gegebenenfalls Hydroxy-, Carboxyl- oder Amidgruppen enthalten kann,

$R^2$ Wasserstoff oder einen $C_1$ bis $C_4$-Alkylrest, vorzugsweise einen Methylrest oder Wasserstoff.

Unter einem Einbau der 2-Oxazoline soll erfindungsgemäß der Einbau dieser Monomere in die Polymerkette durch Copolymerisation oder durch Pfropfung auf die Polymerkette verstanden werden, wobei letztere Methode bevorzugt ist.

Bevorzugte Reste $R^1$ sind

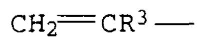

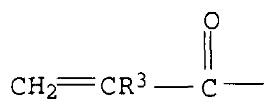

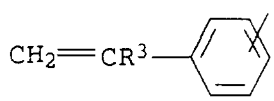

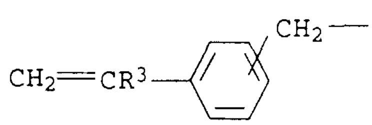

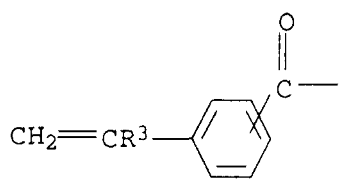

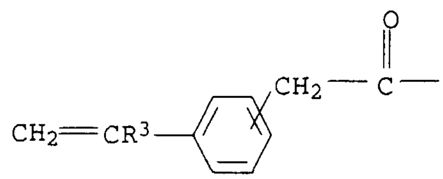

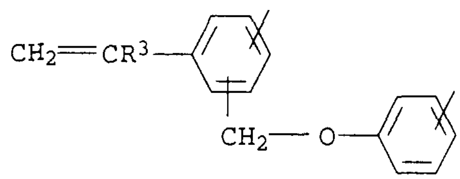

wobei $R^3$ ein Wasserstoffatom oder eine Alkyl- oder Alkoxygruppe mit 1 bis 6 C-Atomen sein kann, z.B. Methyl, i- und n-Propyl oder Butyl-, wobei $R^3$ vorzugsweise Wasserstoff oder Methyl bedeutet.

Als Beispiel für derartige 2-Vinyl-2-oxazoline sei 2-Isopropenyl-2-oxazolin genannt.

Verfahren zur Herstellung dieser Verbindungen sind beispielsweise aus der US 4 902 749 und WO 88/08433 bekannt.

Weitere bevorzugte 2-Oxazoline sind sogenannte 2-Fettalkyl-2-Oxazoline, welche gemäß den in der DE-A 38 24 982, DE-A 39 14 159 und DE-A 42 09 283 beschriebenen Verfahren aus ungesättigten Fettsäureethanolamiden durch Cyclodehydratisierung zugänglich sind. Geeignete Oxazoline sind z.B. die aus dem Ethanolamid der Ölsäure, der Linolsäure, der Linolensäure, der Palmitoleinsäure, der Gadoleinsäure, der Erucasäure oder der Arachidonsäure zugänglichen Oxazoline. Geeignete Oxazoline lassen sich durch Cyclodehydratisierung auch aus den Ethanolamiden technischer Fettsäuregemische herstellen, wie sie aus pflanzlichen und tierischen Ölen, gegebenenfalls nach Abtrennung der gesättigten Fettsäure, erhältlich sind und überwiegend aus Gemischen der vorgenannten einfach- und mehrfach ungesättigten Fettsäuren bestehen. Auch konjugierte mehrfach ungesättigte Fettsäuren, die sich durch Doppelbindungsisomerisierung aus den natürlichen mehrfach ungesättigten Fettsäuren herstellen lassen, eignen sich in Form ihrer Ethanolamide zur Cyclodehydratisierung unter Bildung von 2-alkenylsubstituierten Oxazolinen.

Als weitere geeignete Herstellverfahren für Oxazolingruppen enthaltende Monomere sei die in der DE-A 19 606 198 vorgeschlagene Umsetzung von Nitrilgruppen enthaltenden Monomeren mit Aminalkoholen sowie die Dehydratisierung von N-(2-hydroxyethyl)carbonsäureamiden, welche durch Umsetzung von Carbonsäuren bzw. Carbonsäurestern mit Aminoethanol zugänglich sind (S. Kobayashi, T. Saegusa in Ring-Opening Polymerisation (Hrsg.: K.J. Ivin, T. Saegusa), Elsevier Applied Science Publishers, London und New York 1984, S. 761 - 807) und Dehydrohalogenierung von Halogenamiden, die durch Halogenierung der N-(2-Hydroxyethyl)carbonsäureamide hergestellt werden können. Die Dehydrohalogenierung erfolgt durch starke Basen, wie z.B. Kaliumhydroxid oder Alkoholate (T. G. Bassiri, A. Levy, M. Litt, Polym. Lett. 5, S. 871, 1967) sowie Umsetzung von Nitrilen mit Epoxiden, unter Säurekatalyse (J.R.L. Smith, R.O.C. Norman, M.R. Stillings, J. Chem. Soc. Perkin Trans. I, 1975, S. 1200 - 1202) genannt.

Als bevorzugte Verbindungen seien

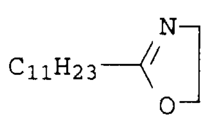

Undecyl-2-oxazolin,
Soja-2-oxazolin mit $R^1$ =

$-(CH_2)_7-CH=CH-CH_2CH=CH-(CH_2)_4-CH_3$ oder

$-(CH_2)_7-CH=CH-(CH_2)_7-CH_3$

und
Ricinol-2-oxazolin

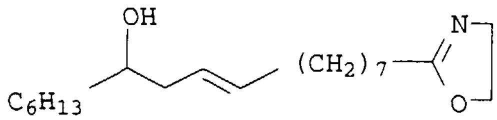

genannt.

Ganz besonders bevorzugt sind

2-Ricinol-2-oxazoline wie

Ricinol-2-oxazolinmethacrylat

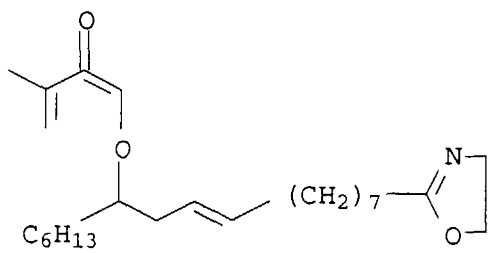

und

Ricinol-2-oxazolinmaleinat

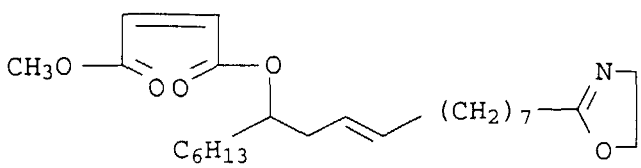

welche gemäß DE-A 42 09 283 aus den entsprechenden 2(Hydroxyalkyl)oxazolinen durch Umsetzung mit z.B. α-β-ungesättigten Estern wie Methylmethacrylat oder Dimethylmaleinat in Gegenwart eines Umesterungskatalysators unter Alkoholabspaltung erhältlich sind.

Ganz allgemein handelt es sich bei den Elastomeren C) um Copolymerisate die bevorzugt aus mindestens zwei der folgenden Monomeren aufgebaut sind: Ethylen, Propylen, Octen, Butylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Bevorzugte Elastomere C) sind Polymerisate auf Basis von Olefinen, die aus folgenden Komponenten aufgebaut sind

$C_1$) 40 bis 100 Gew.-% mindestens eines α-Olefins mit 2 bis 8 C-Atomen

$C_2$) 0 bis 50 Gew.-% eines Diens

$C_3$) 0 bis 45 Gew.-% eines $C_1$-$C_{12}$-Alkylesters der Acrylsäure oder Methacrylsäure oder Mischungen derartiger

Ester,

$C_4$) 0,1 bis 5 Gew.-% eines 2-Oxazolins der Formel II

mit der Maßgabe, daß die Komponente (C) kein Olefinhomopolymerisat ist.

Als erste bevorzugte Gruppe sind die sogenannten Ethylen-Propylen-(EPM)-bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Weiterhin geeignete nichtkonjugierte Diene sind acyclische wie 1,6-Octadien, 3,7-Dimethyl-1,6-Octadien oder alicyclische wie 4-Vinylcyclohexen.

Der Diengehalt der EPDM-Kautschuke beträgt vorzugsweise 0,5 bis 50, insbesondere 1 bis 8 Gew.-%, bezogen auf das Gesamtgewicht des Kautschuks.

Außerdem sind Polyolefincopolymere geeignet, welche durch Polymerisation in Gegenwart eines Metallocenkatalysators erhältlich sind.

Besonders bevorzugte Elastomere C) sind Polyethylenocten- und Polyethylenbutencopolymerisate mit einem Anteil bis zu 50 Gew.-%, vorzugsweise bis zu 45 Gew.-% von Octen und/oder Buten.

Eine weitere Gruppe bevorzugter Olefinpolymerisate sind Copolymere von $\alpha$-Olefinen mit 2 - 8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $C_3$) an den Olefinpolymerisaten beträgt 0 - 45, vorzugsweise 0,1 - 42,5 und insbesondere 0,5 - 41 Gew.-%.

Eine weitere bevorzugte Gruppe der Elastomeren C) sind ABS-, ASA-, und HIPS- (high impact polystyrene) Polymere.

Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugtes vinylaromatisches Polymeres ist schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Bevorzugte ASA-Polymerisate sind aufgebaut aus einer Weich- oder Kautschukphase aus:

$C_1$ 50 bis 90 Gew.-% einer Pfropfgrundlage auf Basis von

$C_{11}$ 95 bis 99,9 Gew.-% eines $C_2$-$C_{10}$-Alkylacrylats und

$C_{12}$ 0,1 bis 5 Gew.-% eines difunktionellen Monomeren mit zwei olefinischen, nicht konjugierten Doppelbindungen, und

$C_2$ 10 bis 50 Gew.-% einer Pfropfauflage aus

$C_{21}$ 20 bis 50 Gew.-% Styrol oder substituierten Styrolen der allgemeinen Formel I oder deren Mischungen, und

$C_{22}$ 10 bis 80 Gew.-% Acrylnitril, Methacrylnitril, Acrylsäureestern oder Methacrylsäureestern oder deren Mischungen,

in Mischung mit einer Hartmatrix auf Basis eines SAN-Copolymeren $C_3$) aus:

$C_{31}$ 50 bis 90, vorzugsweise 55 bis 90 und insbesondere 65 bis 85 Gew.-% Styrol und/oder substituierten Styrolen der allgemeinen Formel I und

$C_{32}$ 10 bis 50, vorzugsweise 10 bis 45 und insbesondere 15 bis 35 Gew.-% Acrylnitril und/oder Methacrylnitril.

Bei der Komponente $C_1$) handelt es sich um ein Elastomeres, welches eine Glasübergangstemperatur von unter -20, insbesondere unter -30°C aufweist.

Für die Herstellung des Elastomeren werden als Hauptmonomere $C_{11}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht $C_{11}$ + $C_{12}$ eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $C_1$ sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $C_1$ am Pfropfpolymerisat $C_1$+$C_2$ beträgt 50 bis 90, vorzugsweise 55 bis 85 und insbesondere 60 bis 80 Gew.-%, bezogen auf das Gesamtgewicht von $C_1$+$C_2$.

Auf die Pfropfgrundlage $C_1$ ist eine Pfropfhülle $C_2$ aufgepfropft, die durch Copolymerisation von

$C_{21}$ 20 bis 90, vorzugsweise 30 bis 90 und insbesondere 30 bis 85 Gew.-% Styrol oder substituierten Styrolen der allgemeinen Formel III

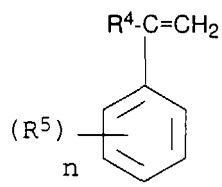

III

wobei $R^4$ Alkylreste mit 1 bis 8 C-Atomen, Wasserstoffatome oder Halogenatome und $R^5$ Alkylreste mit 1 bis 8 C-Atomen oder Halogenatome darstellen und n den Wert 0, 1, 2 oder 3 hat, und

$C_{22}$ 10 bis 80, vorzugsweise 10 bis 70 und insbesondere 15 bis 70 Gew.-% Acrylnitril, Methacrylnitril, Acrylsäureester oder Methacrylsäureestern oder deren Mischungen erhältlich ist.

Beispiele für substituierte Styrole sind α-Methylstyrol, p-Methylstyrol, p-Chlorstyrol und p-Chlor-α-Methylstyrol,

wovon Styrol und $\alpha$-Methylstyrol bevorzugt werden.

Bevorzugte Acryl- bzw. Methacrylsäureester sind solche, deren Homopolymere bzw. Copolymerisate mit den anderen Monomeren der Komponente $C_{22}$) Glasübergangstemperaturen von mehr als 20°C aufweisen; prinzipiell können jedoch auch andere Acrylsäureester eingesetzt werden, vorzugsweise in solchen Mengen, so daß sich insgesamt für die Komponente $C_2$ eine Glasübergangstemperatur $T_g$ oberhalb 20°C ergibt.

Besonders bevorzugt werden Ester der Acryl- oder Methacrylsäure mit $C_1$-$C_8$-Alkoholen und Epoxygruppen enthaltende Ester wie Glycidylacrylat bzw. Glycidylmethacrylat. Als ganz besonders bevorzugte Beispiele seien Methylmethacrylat, t-Butylmethacrylat, Glycidylmethacrylat und n-Butylacrylat genannt, wobei letzterer aufgrund seiner Eigenschaft, Polymerisate mit sehr niedriger $T_g$ zu bilden, vorzugsweise in nicht zu hohem Anteil eingesetzt wird.

Die Pfropfhülle $C_2$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357 und DE-OS 34 14 118 beschrieben ist.

Je nach den gewählten Bedingungen entsteht bei der Pfropfmischpolymerisation ein bestimmter Anteil an freien Copolymerisaten von Styrol bzw. substituierten Styrolderivaten und (Meth)Acrylnitril bzw. (Meth)Acrylsäureestern.

Das Pfropfmischpolymerisat $C_1 + C_2$ weist im allgemeinen eine mittlere Teilchengröße von 100 bis 1.000 nm, im besonderen von 200 bis 700 nm, ($d_{50}$-Gewichtsmittelwert) auf. Die Bedingungen bei der Herstellung des Elastomeren $C_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat ($C_1$+$C_2$) zählen im Rahmen dieser Erfindung auch die bei der Pfropfmischpolymerisation zur Herstellung der Komponente $C_2$) entstehenden freien, nicht gepfropften Homo- und Copolymerisate.

Nachstehend seien einige bevorzugte Pfropfpolymerisate angeführt:

1:

60 Gew.-% Pfropfgrundlage $C_1$ aus
$C_{11}$ 98 Gew.-% n-Butylacrylat und
$C_{12}$ 2 Gew.-% Dihydrodicyclopentadienylacrylat und
40 Gew.-% Pfropfhülle $C_2$ aus
$C_{21}$ 75 Gew.-% Styrol und
$C_{22}$ 25 Gew.-% Acrylnitril

2: Pfropfgrundlage wie bei 1 mit 5 Gew.-% einer ersten Pfropfhülle aus Styrol und

35 Gew.-% einer zweiten Pfropfstufe aus
$C_{21}$ 75 Gew.-% Styrol und
$C_{22}$ 25 Gew.-% Acrylnitril

3: Pfropfgrundlage wie bei 1 mit 13 Gew.-% einer ersten Pfropfstufe aus Styrol und 27 Gew.-% einer zweiten Pfropfstufe aus Styrol und Acrylnitril im Gewichtsverhältnis 3:1

Die als Komponente $C_3$) enthaltenen Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von ($C_1$ + $C_2$):$C_3$ liegt im Bereich von 1:2,5 bis 2,5:1, vorzugsweise von 1:2 bis 2:1 und insbesondere von 1:1,5 bis 1,5:1.

ABS-Polymere als Polymere (C) in den erfindungsgemäßen Polymermischungen weisen den gleichen Aufbau wie vorstehend für ASA-Polymere beschrieben auf. Anstelle des Acrylatkautschukes $C_1$) der Pfropfgrundlage beim ASA-Polymer werden üblicherweise konjugierte Diene, eingesetzt, so daß sich für die Pfropfgrundlage $C_4$ vorzugsweise folgende Zusammensetzung ergibt:

$C_{41}$ 70 bis 100 Gew.-% eines konjugierten Diens und
$C_{42}$ 0 bis 30 Gew.-% eines difunktionellen Monomeren mit zwei olefinischen nicht-konjugierten Doppelbindungen

Pfropfauflage $C_2$ und die Hartmatrix des SAN-Copolymeren $C_3$) bleiben in der Zusammensetzung unverändert. Derartige Produkte sind im Handel erhältlich. Die Herstellverfahren sind dem Fachmann bekannt, so daß sich weitere Angaben hierzu erübrigen.

Das Gewichtsverhältnis von ($C_4$ + $C_2$) : $C_3$ liegt im Bereich von 3:1 bis 1:3, vorzugsweise von 2:1 bis 1:2.

Die Pfropfung der vorstehenden Elastomeren C), bevorzugt des Olefinpolymerisats, mit den Oxazolingruppen enthaltenden Monomeren erfolgt vorzugsweise in Gegenwart von Initiatoren in der Schmelze.

Geeignete Initiatoren weisen vorzugsweise bei den jeweiligen Verarbeitungstemperaturen eine Halbwertszeit von 30 bis 40 s und eine möglichst hohe Pfropfeffizienz (hohe H-Atom-Abstraktionsfähigkeit) auf.

Bei Verarbeitungstemperaturen von 200°C und höher eignen sich hierfür insbesondere Verbindungen wie Ditert.-butylperoxid, Dicumylperoxid, Bis(tert.-butylperoxiyisopropyl)benzol oder 2,5-Bis(tert.-butylperoxy-)2,5-dimethylhexan.

Für nähere Einzelheiten sei an dieser Stelle auf P. Bernbrich et al., Kunststoffe 83 (1993) S. 885 bis 888 verwiesen.

Als Komponente D) enthalten die erfindungsgemäßen Formmassen 0,05 bis 5, vorzugsweise 0,1 bis 4 und insbesondere 0,5 bis 1 Gew.-% eines Bisoxazolins der allgemeinen Formel IV

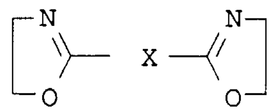

IV

wobei

X einen gesättigten, ungesättigten, aliphatischen, cycloaliphatischen Rest mit 2 bis 60 C-Atomen, einen araliphatischen oder aromatischen Rest mit 6 bis 60 C-Atomen bedeutet, wobei X Carboxyl- und Amidgruppen enthalten kann.

Als Verbindungen seien 2-(1,3-Oxazolin-2-yl)-1,3-oxazolin, Bis(1,3-Oxazolin-2-yl)-1,4-phenylen und Bis(1,3-Oxazolin-2-yl)-1,4-butan genannt, welche durch Umsetzung von Dicarbonssäureestern mit Aminoethanol und anschließender Dehydratisierung in Schwefelsäure erhältlich sind.

Bevorzugte Bisoxazoline sind solche der allgemeinen Formel IV, in welcher X für einen Rest der Formel V

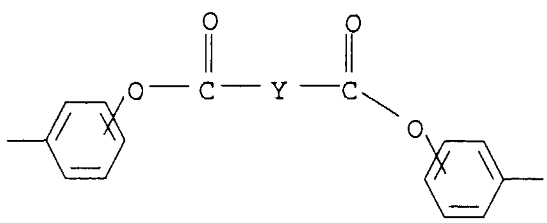

V

steht, wobei Y für einen Kohlenwasserstoffrest mit 1 bis 24 C-Atomen steht.

Als besonders bevorzugte Verbindung sei

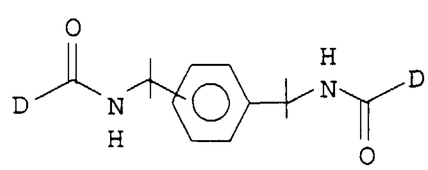

genannt mit

D

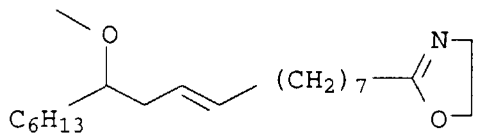

welche durch Umsetzung von Ricinol-2-oxazolin mit Tetramethylxyloldiisocyanat erhältlich ist (s. B. Birnbrich et al, Kunststoffe 83 (1993), S. 885 bis 888).

Als Komponente E) können die erfindungsgemäßen thermoplastischen Formmassen weitere Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als faser- oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 Gew.-% eingesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Geeignete Flammschutzmittel E) können in den erfindungsgemäßen Formmassen in Mengen von 0 bis 30, vorzugsweise 1 bis 25 und insbesondere 10 bis 20 Gew.-% bezogen auf das Gesamtgewicht der Komponenten A) bis E) enthalten sein.

Bei der Komponente E) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a.. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab.

Geeignet sind Phosphinoxide der allgemeinen Formel I

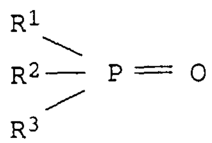

I

wobei $R^1$, $R^2$ und $R^3$ gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenyl-phosphinoxid, Tricyclohexlyphosphinoxid, Tris-(n-octyl)-phosphinoxid und Tris-(cyanoethyl)-phosphinoxid.

Ebenso geeignet ist Triphenylphosphinsulfid und dessen wie oben beschriebene Derivate der Phosphinoxide.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Beispiele sind Calciumhypophosphit und Magnesiumhypophosphit, daneben auch Doppelhypophosphite oder komplexe Hypophosphite, oder organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäuren wie z.B. Poly-β-natrium(I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das an organische Poly(ammoniumphosphat)

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Als weitere halogenfreie Flammschutzmittel seien Melamincyanurat, Magnesiumhydroxid und Mischungen von Erdalkalicarbonaten genannt.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Mischung zu erhalten, ist eine intensive Durchmischung vorteilhaft. Dazu sind im allgemeinen mittlere Mischzeiten von 0,2 bis 30 Minuten bei Temperaturen von 160 bis 320°C, bevorzugt 200 bis 300°C, erforderlich. Nach der Extrusion wird das Extrudat in der Regel abgekühlt und zerkleinert.

Die erfindungsgemäßen Formmassen zeichnen sich durch gute Homogenität sowie verbesserte Zähigkeit und Verarbeitungsstabilität aus.

Aufgrund der genannten Eigenschaften und der hohen Wärmebeständigkeit sind diese Formmassen zur Herstellung von Formkörpern geeignet, die z.B. im Haushalts-, Elektro-, Kfz- und Medizintechnikbereich eingesetzt werden können.

## Beispiele

### Komponente A

Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol, 1:1-Mischung bei 25°C).

### Komponente B

Polycarbonat auf Basis von Bisphenol A, (Lexan® 161 der General Electric), mit einer Viskositätszahl von 61,2 ml/g (gemessen in 0,5 gew.-%iger $CH_2Cl_2$-Lösung bei 23°C)

### Komponente C

Herstellung des oxazolinhaltigen Elastomeren C) Auf einem Zweischneckenextruder (ZSK 30, Werner & Pfleiderer) wurden 6 kg eines Ethylenoctencopolymeren mit einem Anteil von 26 Gew.-% Octen (Engage® 8150 der Firma Dow Chemical), 120 g Ricinol-2-oxazolinmaleinat (Loxamid® VEP 8515 der Firma Henkel KGA) sowie 6 g Di-tert-Butylperoxid bei 210°C umgesetzt.

Die Pfropfreaktion wurde wie folgt durchgeführt:
innerhalb von 30 sek. Zugabe des Kautschuks, 1 min Aufschmelzen bei 210°C, innerhalb von 30 sec. Zudosierung des Oxazolins, 5 min Pfropfung.

Die Schmelze wurde entgast und extrudiert, mit einem Wasserbad gekühlt und granuliert.

Durch quantitative FTIR-Spektroskopie des Rohprodukts und von einer umgefällten Probe (2x in Aceton) wurde der Pfropfgrad zu 0,4 % bestimmt. Der Pfropfgrad P ist wie folgt definiert:

$$P = \text{Masse (Pfropfprodukt = Oxazolin + Kautschuk)/Masse Kautschuk} \cdot 100.$$

Die Pfropfausbeute (Masse gepfropftes Oxazolin/Gesamtmasse Oxazolin) betrug 20 %.

Komponente C/V

Ein Pfropfpolymerisat mit einem Propfkern aus 70 Gew.-%, Butadien und 14,4 Gew.-% Styrol und einer Hülle aus 15,6 Gew.-% Methylmethacrylat, charakterisiert durch Glasübergangstemperaturen von -77°C und 82° C (DSC, 20 K/min Aufheizrate).
(Paroloid® EXL 3600 der Firma Rohm & Haas)

Komponente D

Bisoxazolin der Formel

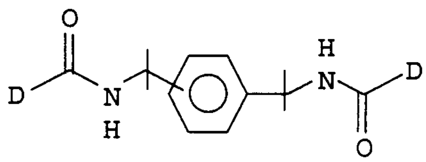

mit
D =

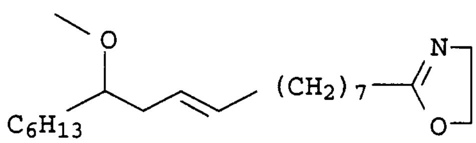

Komponente E1

Glasfaserroving mit einem Durchmesser von 10 μm aus E-Glas, der mit einer Epoxy-Schlichte ausgerüstet war

Komponente E/2

Talkum, z.B. IT-Extra
mittlere Teilchengröße von 4,9 μm (bestimmt in einer Suspensionszelle mit VE-Wasser als Flüssigkeit)

Komponente E/3

Tetrakis-(2,4-Di-tert.-butylphenyl)-4,4-diphenylen-diphosphonit mit einem Schmelzbereich von 75-95°C (Irgaphos® P-EPQ der Fa. Ciba-Geigy AG)

Herstellung und Prüfung der Formmassen

Die Komponenten A) bis E) wurden auf einem Zweischneckenextruder bei 250 bis 260°C abgemischt und in ein Wasserbad extrudiert. Nach Granulierung und Trocknung wurden auf einer Spritzgußmaschine Prüfkörper gespritzt und geprüft.

Die Wärmeformbeständigkeit wurde als HDT B gemäß ISO 75 B ermittelt. Die Reißfestigkeit und Reißdehnung der Produkte wurde nach ISO 527 an Zugstäben ermittelt, ebenso der E-Modul. Die Kerbschlagzähigkeit der Produkte wurde an ISO-Stäben nach ISO 179 1eA bestimmt.

Die Schädigungsarbeit wurde nach DIN 53 433 bei -30°C gemessen.

Die Eigenfarbe der Produkte wurde qualitativ bewertet und in die Klassen h.: hell, s.g.: schwach gelblich, g.: gelb eingeteilt.

Die Verarbeitungsstabilität wurde durch Messung der Schmelzeviskosität bei 270°C über einen Zeitraum von 20 Minuten ermittelt. Die Scherrate betrug 55 $s^{-1}$. Der angegebene Wert errechnet sich wie folgt:

$$\Delta = \frac{\eta_5 - \eta_{25}}{\eta_5} \cdot 100\%$$

$\eta_5$ = Schmelzeviskosität nach 5 Min.
$\eta_{25}$ = Schmelzviskosität nach 25 Min.

Die Zusammensetzung der Formmassen und die Ergebnisse der Messungen sind den Tabellen 1 und 2 zu entnehmen.

Tabelle 1

| Beispiel Komponente [Gew.-%] | V1 | V2 | 1 | 2 | V3 | V4 |
|---|---|---|---|---|---|---|
| A | 39 | 39 | 39 | 39 | 39 | 37 |
| B | 50 | 50 | 50 | 50 | 50 | 47,5 |
| C | - | 10 | 9,5 | 9 | - | 9 |
| C/V | 10 | - | - | - | 9 | - |
| D | - | - | 0,5 | 1 | 1 | 5,5 |
| E/3 | 1 | 1 | 1 | 1 | 1 | 1 |
| HDT B [°C] | 96 | 97 | 98 | 99 | 97 | 99 |
| E-Modul [N/mm²] | 2300 | 2350 | 2350 | 2340 | 2330 | 2370 |
| $\delta_B$ [N/mm²] | 53 | 55 | 58 | 59 | 52 | 48 |
| $\varepsilon_b$ [%] | 67 | 78 | 156 | 190 | 78 | 67 |
| $a_K$ [kJ/m²] | 54 | 56 | 67 | 72 | 48 | 46 |
| $W_{s, -30°C}$ [Nm] | 56 | 53 | 76 | 82 | 45 | 34 |
| Eigenfarbe | s.g. | h. | h. | h. | h. | g. |
| Δ [%] | 66 | 37 | 21 | 24 | 63 | 76 |
| V: Vergleichsbeispiele | | | | | | |

Die Versuche belegen das hervorragende Eigenschaftsspektrum der erfindungsgemäßen thermoplastischen Formmassen, wobei insbesondere die Zähigkeitssteigerung und die Verbesserung der Verarbeitungsstabilität hervorzuheben ist.

Tabelle 2

| Beispiel Komponente [Gew.-%] | V5 | V6 | 3 | V7 | V8 | 4 |
|---|---|---|---|---|---|---|
| A | 34 | 34 | 34 | 37 | 37 | 37 |
| B | 45 | 45 | 45 | 47 | 47 | 47 |
| C | - | 10 | 9,5 | - | - | 9 |
| C/V | 10 | - | - | 10 | 9 | - |
| D | - | - | 0,5 | - | 1 | 1 |
| E/1 | - | - | - | 5 | 5 | 5 |
| E/2 | 10 | 10 | 10 | - | - | - |
| E/3 | 1 | 1 | 1 | 1 | 1 | 1 |
| HDT B [°C] | 99 | 98 | 99 | 102 | 103 | 103 |
| E-Modul [N/mm$^2$] | 3150 | 3100 | 3160 | 3240 | 3270 | 3300 |
| $\delta_B$ [N/mm$^2$] | 43 | 39 | 56 | 54 | 56 | 71 |
| $\varepsilon_b$ [%] | 8 | 8 | 25 | 3,5 | 4,1 | 17,1 |
| $a_k$ [kJ/m$^2$] | 4 | 4 | 9 | 5 | 6 | 11 |
| $W_{s, -30°C}$ [Nm] | 13 | 11 | 45 | 2 | 2 | 18 |
| $\Delta$ [%] | 57 | 45 | 23 | 56 | 48 | 32 |
| V: Vergleichsbeispiele | | | | | | |

**Patentansprüche**

1. Thermoplastische Formmassen, enthaltend

   A) 1 bis 97 Gew.-% eines thermoplastischen Polyesters

   B) 1 bis 97 Gew.-% eines Polycarbonats

   C) 1 bis 40 Gew.-% eines Oxazolingruppen enthaltenden Elastomeren mit einer Glasübergangstemperatur ($T_g$) ≤ 0°C

   D) 0,05 bis 5 Gew.-% eines Bisoxazolins

   E) 0 bis 70 Gew.-% weiterer Zusatzstoffe und Verarbeitungshilfmittel,

   wobei die Summe der Gewichtsprozente der Komponenten A) bis E) 100 % ergibt.

2. Thermoplastische Formmassen nach Anspruch 1, enthaltend als Komponente A) Polyalkylenterephthalate, die sich von Alkandiolen mit 2 bis 10 C-Atomen ableiten.

3. Thermoplastische Formmassen nach den Ansprüchen 1 oder 2, in denen die Komponente C) 0,1 bis 5 Gew.-% bezogen auf 100 Gew.-% eines 2-Oxazolins der allgemeinen Formel II

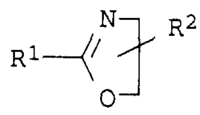

II

enthält,
in der die Substituenten folgende Bedeutung haben:

$R^1$ einen aliphatischen, cycloaliphatischen, aromatischen oder araliphatischen Kohlenwasserstoffrest mit 2 bis 60 C-Atomen, welcher gegebenenfalls Hydroxy-, Carboxyl oder Amidgruppen enthalten kann,

$R^2$ Wasserstoff oder einen $C_1$ bis $C_4$-Alkylrest.

**4.** Thermoplastische Formmassen nach den Ansprüchen 1 bis 3, enthaltend Bisoxazoline D) der allgemeinen Formel IV

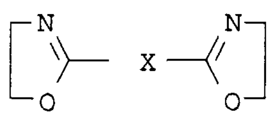

IV

wobei

X für einen gesättigten, ungesättigten, aliphatischen oder cycloaliphatischen Rest mit 2 bis 60 C-Atomen, einen araliphatischen oder aromatischen Rest mit 6 bis 60 C-Atomen bedeutet, wobei X Carboxyl- und Amidgruppen enthalten kann.

**5.** Thermoplastische Formmassen nach den Ansprüchen 1 bis 4, enthaltend als Elastomer C) ein Olefinpolymerisat aufgebaut aus

$C_1$) 40 bis 99,9 Gew.-% mindestens eines $\alpha$-Olefins mit 2 bis 8 C-Atomen

$C_2$) 0 bis 50 Gew.-% eines Diens

$C_3$) 0 bis 45 Gew.-% eines $C_1$-$C_{12}$-Alkylesters der Acrylsäure oder Methacrylsäure oder Mischungen derartiger Ester,

$C_4$) 0,1 bis 5 Gew.-% eines 2-Oxazolins der Formel II gemäß Anspruch 3

mit der Maßgabe, daß die Komponente (C) kein Olefinhomopolymerisat ist.

**6.** Thermoplastische Formmassen nach Anspruch 5, in denen das Elastomer C) erhältlich ist durch radikalische Pfropfung des Olefinpolymerisates in Gegenwart von Initiatoren in der Schmelze mit 2-Oxazolinen der allgemeinen Formel II gemäß Anspruch 3.

**7.** Thermoplastische Formmassen nach den Ansprüchen 1 bis 4, enthaltend als Elastomer C) vinylaromatische Polymere aus der Gruppe der ASA-, ABS- und HIPS-Polymeren.

**8.** Verwendung der thermoplastischen Formmassen gemäß den Ansprüchen 1 bis 7 zur Herstellung von Fasern, Folien und Formkörpern.

**9.** Formkörper erhältlich aus den thermoplastischen Formmassen gemäß den Ansprüchen 1 bis 7.